# EUROPEAN PATENT APPLICATION

(11) **EP 1 260 295 A1**
(43) Date of publication of application: **27.11.2002**
(21) Application number: 02445057.9
(22) Date of filing: 14.05.2002
(51) Int. Cl.: B23B 27/06

(54) **Tool and cutting insert**

(30) Priority: 18.05.2001 SE 0101752
(71) Applicant: SECO TOOLS AB, S-737 82 Fagersta (SE)
(72) Inventor: Rydberg, Christer, 737 31 Fagersta (SE)
(74) Representative: Taquist, Lennart

(57) **Abstract**

The present invention relates to a tool and a cutting insert for form turning. The tool (10) comprises a cutting insert (13) and a holder (12). The cutting insert and holder comprise two cooperating surfaces (16) and means (14) for forcing the surfaces together. Said surfaces are profiled with grooves such to allow locking by shape against each other. Everyone of said surfaces comprises at least two grooved parts (16A,16B), which comprise said grooves and which grooved parts are provided substantially perpendicularly to each other. The cutting insert and the holder have holes (15,25) for clamping. The cutting insert has a cutting edge (17). The hole (25,15) of the cutting insert (13) or of the holder (12) is elongated such to allow feed of the cutting insert relative to the holder.

## Description

### Background of the invention

The present invention relates to a tool and a cutting insert for form turning according to the preambles of the independent claims.

### Prior art

Through US-A-6,146,060 is previously known a tool that comprises a cutting insert and a holder. The cutting insert and holder comprise two cooperating surfaces and a screw such to force the surfaces together. The surfaces are profiled with grooves such to allow locking by shape to each other. The cooperating surfaces allow at least four separate positions in relation to each other by means of a special waffle pattern.

In US-A-1,354,578 is shown a tool there a grooved cutting insert is held in the holder with the assistance of a wedging effect. There are practical difficulties in wedging a cutting insert in a simple and exact manner.

### Objects of invention

One object of the present invention is to provide a cutting insert and a tool for form turning which comprises the advantages of prior art.

Another object of the present invention is to provide a cutting insert and a tool for form turning where the cutting insert simply can be mounted on the holder.

Still another object of the present invention is to provide a cutting insert and a tool for form turning where the cutting insert is rigidly held on the holder.

Still another object of the present invention is to provide a tool for form turning having a minimum of parts.

These and other objects have been achieved by a cutting insert and a tool for form turning such as defined in the appended claims with reference to the drawings.

### Description of the drawings

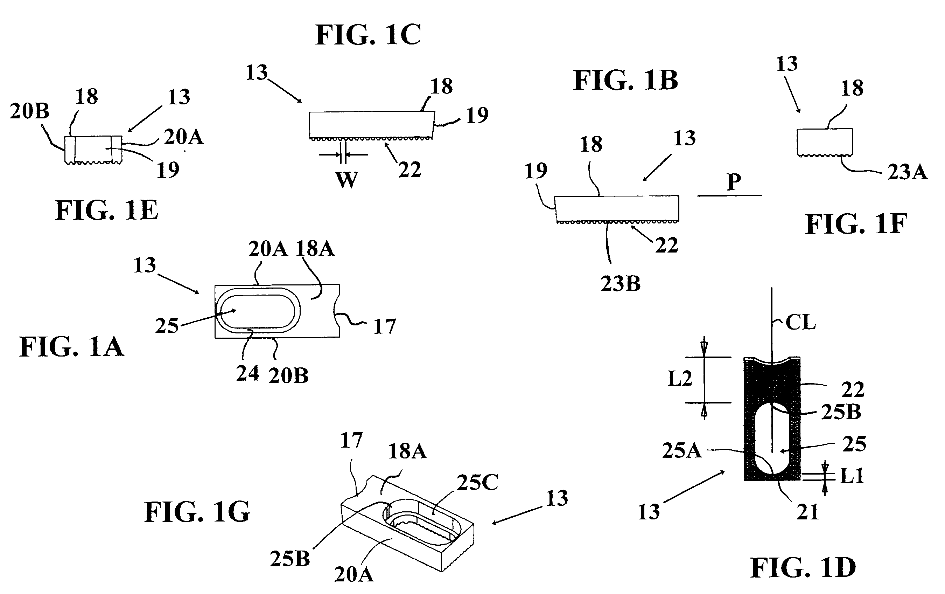

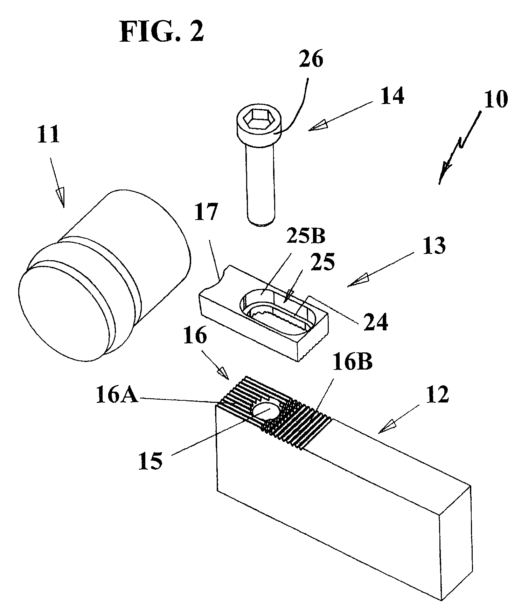

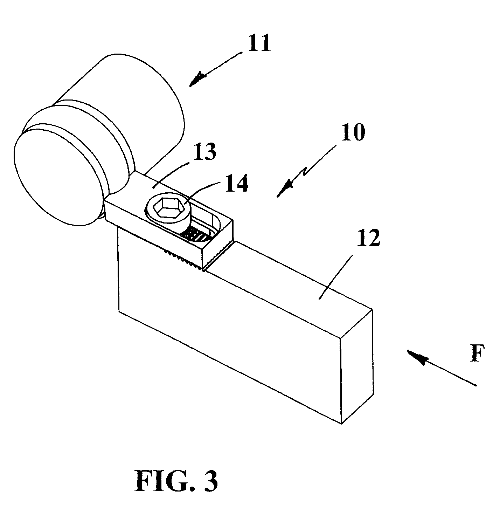

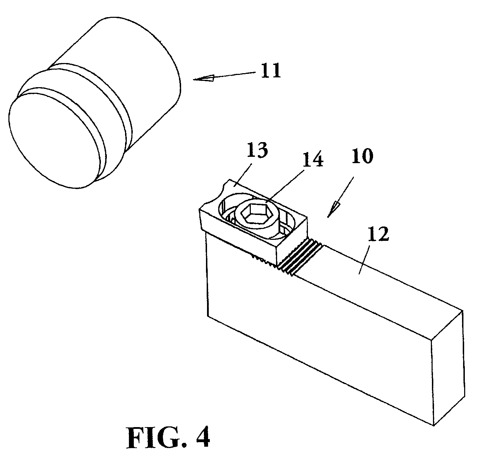

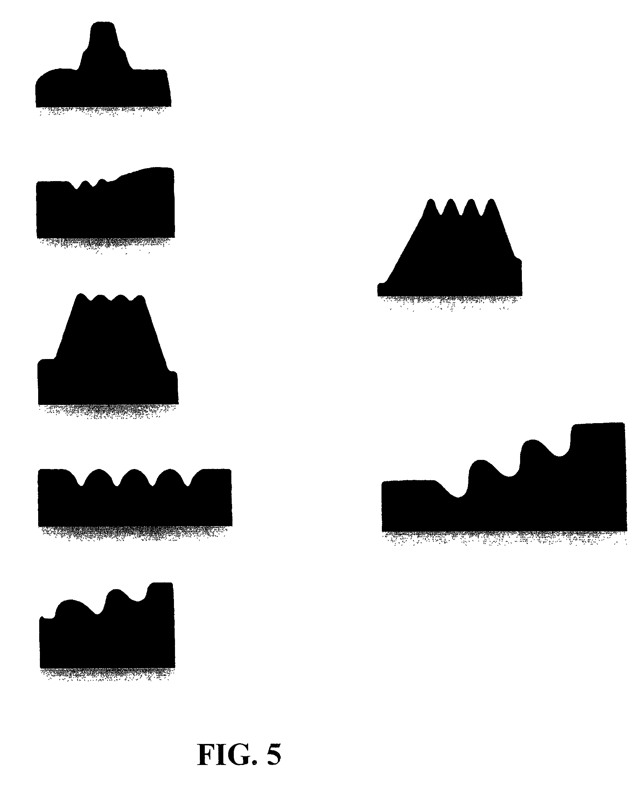

Fig. 1A shows a cutting insert according to the present invention in a top view. Fig. 1B shows the cutting insert in a side view. Fig. 1C shows the cutting insert in a side view opposed to Fig. 1B. Fig. 1D shows the cutting insert in a bottom view. Fig. 1E shows the cutting insert in a front view. Fig. 1F shows the cutting insert in a rear view. Fig. 1G shows the cutting insert in a perspective view. Fig. 2 shows a tool according to the present invention in an exploded view and a work piece. Fig. 3 shows the tool and the work piece in a perspective view. Fig. 4 shows the tool with a cutting insert after regrinding and the work piece in a perspective view. Fig. 5 shows a number of alternate forms regarding the cutting edge portion of the cutting insert.

### Detailed description of preferred embodiments of the invention

Fig. 2 shows a tool 10 according to the present invention for form turning comprising a substantially rectangular holder 12, a cutting insert 13 having a cutting edge and a screw 14.

The holder 12 may be made of steel, hard metal or speed steel. One free end of the holder 12 is intended to be secured to a lathe while the opposed other free end comprises a support surface 16 and a threaded hole 15. The threaded hole 15 has a conical entering bevel. The support surface 16 has a rectangular basic shape and comprises two grooved parts 16A, 16B. Each grooved part covers substantially half of the support surface 16 and comprises a number of from each other spaced, identical serrations or grooves. The grooves in the grooved parts have two main directions, which are perpendicular to each other. A second grooved part 16A is bordered by a first grooved part 16B. Substantially each groove in the first grooved part 16B intersects the jacket surface of the holder at two places while substantially each groove in the second grooved part 16A intersects the jacket surface of the holder at one place. Each groove is elongated and is substantially V-shaped in cross-section. Each groove has a biggest width W. The width is in the magnitude of 0,2 to 2 mm, preferably about 1,5 mm. Each groove has two flanks which, via a sharp or rounded transition, connect to a bottom. The flanks form an acute angle with each other. The angle lies within the interval of 40° to 80°, preferably 55° to 60°. Each surface is preferably planarly shaped and connects to an associated flank via an obtuse inner, soft or sharp, transition. The number of grooves in each grooved part depends of how the support surface of the cutting insert is formed and the number is chosen in the interval 5 to 20 grooves. The bottom may alternatively be described by a radius of about 0,2 to 0,4 mm. The design of the grooved parts 16A, 16B gives a considerably bigger specific surface than if that should be planar. The grooved parts 16A, 16B covers at least 80%, preferably 90-100%, of amenable area on the support surface 16.

The first grooved part 16B has been made, through hobbing or grinding. Subsequently the second grooved part 16A has been machined with the same tool in direction perpendicularly to the first mentioned machining. To obtain full depth in each groove in the second grooved part 16A it is appropriate that the tool is fed somewhat into in the first grooved part 16B. Then said tool will also machine material which is part of the first grooved part 16B. Full pyramids or partly pyramid shaped tips are formed at the end of the second grooved part 16A in the first grooved part 16B.

In Figs. 1A-1G an elongated cutting insert 13 according to the present invention is shown. The cutting insert may be performed in hard metal, cermet or speed steel and shall be used for turning of profiles in a work piece 11. The cutting insert has a rectangular basic shape and comprises at least one cutting edge 17, which is provided in the forward end of the cutting insert. The cutting edge 17 is shaped at an intersection between an upper side or chip surface 18 and a clearance surface 19. The cutting edge 17 lies essentially in the plane P of the upper side 18 and is non-linear; i.e. it is intended to shape a contour in the work piece. Often a non-linear cutting edge at form turning forms cutting forces whose resultant differs from the plane of the longitudinal axis CL of the cutting insert and therefore a rigid fixture of the cutting insert is of importance for the machining result. The clearance surface 19 connects to a lower side or support surface 22 of the cutting insert. The support surface 22 has a rectangular basic shape and comprises two grooved parts: a first grooved part 23A and a second grooved part 23B. Each grooved part substantially covers the entire support surface 22 and comprises a number of from each other spaced, identical serrations or grooves. Grooves in the grooved parts have two main directions, which are perpendicular to each other. Substantially each groove in the first grooved part 23A intersects the clearance surface 19 while substantially each groove in the second grooved part 23B intersects both side faces 20A, 20B of the cutting insert. Each groove is elongated and is substantially V-shaped in cross-section. Each groove has a biggest width W and a depth. Each groove has two flanks which, via a sharp or rounded transition, connect to a bottom. The flanks form an obtuse angle with each other. The angle lies within the interval of 40° to 80°, preferably 55° to 60°. Each surface is preferably planarly shaped and connects to an associated flank via an obtuse inner, soft or sharp, transition. The number of grooves in each grooved part depends on how the support surface of the holder is formed and the number is chosen in the interval of 5 to 20 grooves. The bottom may alternatively be described by a radius of about 0,2 to 0,4 mm. The design of the grooved parts 23A, 23B gives a considerable bigger specific surface than if that should be planar. The grooved parts 23A, 23B covers at least 80%, preferably 90-100%, of amenable area on the support surface 22. The grooved parts 23A, 23B are displaced a distance W/2 relative to both directions for the grooved parts 16A and 16B of the holder 12. The cutting insert has an un-threaded hole 25 for receiving a screw or other clamping means. The hole 25 is elongated and placed centrally about the longitudinal axis CL of the cutting insert 13. The longitudinal axis CL is parallel with the feed direction F of the tool. The rear rounded end 25A of the hole 25 is placed at a distance L1 from an end surface 21 of the cutting insert. The distance L is substantially similar to the width W. The forward rounded end 25B of the hole 25 is placed at a distance L2 from of the cutting insert edge 17, see Fig. 1D. The distance L2 is substantially bigger than the distance L1, preferably at least 5 times bigger to enable many regrindings of the clearance surface 19. Consequently, the cutting insert 13 has been provided with an area 18A between the hole 25 and the cutting edge 17 which is intended to be ground after wear of the previous cutting edge. The hole 25 has a circumferential collar or shoulder 24, which is countersunk relative to the upper side 18 and against which a head 26 of the screw 14 will abut at tightened connection. The shoulder 24 connects upwardly to a circumferential wall 25C. The cutting edge 17 is longer than the biggest width of any of said ends 25A, 25B.

Regarding cooperation of the support surface 16 and the support surface 22 reference is made to US-A-6,146,060.

The milling tool 10, (see Figs. 2 and 3) is mounted by putting by hand the support surface 22 of the cutting insert 13 against the support surface 16 of the holder 12 in one of the four possible positions such that the cutting edge 17 projects outside of the holder 12 free end. Thereby the groove directions for the support surface 22 are aligned with the groove directions for the support surface 16. The screw 14 is brought through the insert hole 25 and towards the threaded hole 15. By rotation of the screw 14 by means of a key which is in engagement with the key grip the cutting insert will be drawn firmly against the support surface, i.e. the position according to Fig. 3 has been achieved. The head 26 of the screw then abuts against the shoulder 24. The cutting insert 13 is now secured to the holder 12 in a satisfactory manner.

The reason for that only one surface should have waffle pattern over its entire area is that the tool obtains a more distinct locking effect than if both the surfaces would be waffle patterned. When the cutting insert 13 shall be exchanged the mounting process is inverted, whereafter the cutting insert can be removed from the holder and be exchanged. Fig. 4 shows the position of the cutting insert 13 on the holder 12 after a number of regrindings of the clearance surface 19. In this position only the straight parts of the shoulder 24 are used. As the cutting insert becomes shorter the serrations of the second grooved part 16A are always used while fewer of serrations of the first grooved part 16B are used. It should be noted that each groove width W often corresponds to one or two regrindings, such that the grinding operator simply can adapt the regrinding with assistance from the cutting insert geometry. Furthermore, the clamping means contributes to the regrinding in such a manner that it guides the cutting insert in the feed direction F such that the cutting insert is not positioned incorrectly in the transversal direction.

In Fig. 5 are shown a number of different embodiments of forward ends of the profiling cutting insert, whereof all except one are asymmetrical about the longitudinal axis CL of the cutting insert. The gray portions below the forward ends signify the continuation of the cutting inserts comprising clamping means. All alternative embodiments comprise non-linear cutting edges for form turning.

The clamping means may alternatively be developed with an internal pull rod, such as a stretching screw, where the hole 25 comprises an integral thread which cooperates with a threaded free end with the pull rod while the other end is secured at an axially movable nut. In the latter example there is an elongated slot along the support surface of the holder. In the embodiment shown in Fig. 1D the grooved parts have been made through direct pressing and sintring or through grinding.

Consequently, a cutting insert and a tool for form turning are provided where the cutting insert simply can be mounted on the holder, where the design of the cutting insert simplifies regrinding and where the tool comprises a minimum of parts. In addition, the cutting insert is rigidly held on the holder that is a big advantage when using asymmetrical, non-linear cutting edges for form turning.

## Claims

1. Tool for turning comprising a cutting insert (13) and a holder (12), said cutting insert and holder comprising two cooperating surfaces (16;22) and means (14) for forcing the surfaces together, said surfaces being profiled with grooves such to allow locking by shape against each other, everyone of said surfaces comprising at least two grooved parts (16A,16B;23A,23B) which comprise said grooves and which grooved parts are provided substantially perpendicular to each other, said cutting insert and holder having holes (15,25) for clamping, said cutting insert having a cutting edge (17) and an upper side (18) opposed to a support surface (22), **characterized in that** the cutting insert (13) is elongated and comprises a non-linear cutting edge (17) intended for form turning in a feed direction (F), said cutting edge (17) being provided substantially in a plane (P) of the upper side (18) and that the hole (15,25) of the cutting insert (13) or of the holder (12) is elongated such to allow feed of the cutting insert relative to the holder with a distance (W) corresponding to the distance between two adjacent grooves.

2. The tool according to claim 1, **characterized in that** the hole (25) runs through the upper side (18) of the cutting insert (13) and **in that** the upper side (18) is substantially plane-parallel with the support surface (22) and **in that** the cutting edge (17) of the cutting insert is asymmetrical relative the longitudinal axis (CL) of the cutting insert.

3. The tool according to claim 1 or 2, **characterized in that** the cutting edge (17) of the cutting insert (13) essentially lies in plane (P) upper side (18) and **in that** the hole (25) has two rounded ends, said cutting edge (17) being longer than the biggest width of any of said ends.

4. The tool according to claim 1 or 2, **characterized in that** the cutting insert (13) comprises an area (18A) provided between the hole (25) and the cutting edge (17) intended to be ground.

5. Cutting insert for turning for application in a turning tool according to claim 1, said the cutting insert having a support surface (22) opposed to an upper side (18), said support surface profiled with grooves such to allow locking by shape to the holder, said surface comprising at least two grooved parts (23A,23B) which comprise said grooves and which grooved parts are provided substantially perpendicular to each other, said cutting insert having a hole (25) for clamping, said cutting insert having a cutting edge (17), **characterized in that** the cutting insert (13) is elongated and comprises a non-linear cutting edge (17) intended for form turning in a feed direction (F), said cutting edge (17) being substantially provided in the plane (P) of the upper side (18) and **in that** the cutting insert (13) is provided with an elongated through-going hole (25) or a threaded hole such to allow feed of the cutting insert relative to the holder.

6. The cutting insert according to claim 5, **characterized in that** the hole (25) runs through the upper side (18) of the cutting insert (13) and **in that** the upper side (18) is substantially plane-parallel with the support surface (22) and **in that** the cutting edge (17) of the cutting insert is asymmetrical relative to the longitudinal axis (CL) of the cutting insert.

7. The cutting insert according to claim 5 or 6, **characterized in that** the cutting insert (13) has a cutting edge (17) which essentially lies in the plane (P) of the upper side (18) and **in that** the hole (25) has two rounded ends, said cutting edge (17) being longer than the biggest width of any of said ends.

8. The cutting insert according to claim 5 or 6, **characterized in that** the cutting insert (13) comprises an area (18A) provided between the hole (25) and the cutting edge (17) intended to be ground.
